# EUROPEAN PATENT SPECIFICATION

(11) **EP 1 177 261 B1**
(45) Date of publication and mention of the grant of the patent: **09.02.2005**
(21) Application number: 00912705.1
(22) Date of filing: 17.03.2000
(51) Int. Cl.: C09D 5/00, E01F 9/04

(54) **ROAD MARKING MATERIAL**
STRASSENMARKIERUNGSMATERIAL
MATIERE DE MARQUAGE DE ROUTE

(30) Priority: 17.03.1999 FI 990598
(43) Date of publication of application: 06.02.2002
(73) Proprietor: Tieliikelaitos, 00520 Helsinki (FI); Karppinen, Arto, 20500 Turku (FI)
(72) Inventor: KARPPINEN, Arto, FIN-20500 Turku (FI)
(74) Representative: Kaukonen, Juha Veikko
(86) International application number: PCT/FI2000/000219
(87) International publication number: WO 2000/055262

(56) References cited:
- EP-A2- 0 304 767
- GB-A- 2 059 430
- US-A- 4 076 671
- US-A- 4 105 808

## Description

The invention relates to a road marking material suitable for forming a road marking having a layer thickness of at most 0.7 mm, the material comprising resin, elastomer and an extender.

Road markings refer to markings made on the surface of a road or some other corresponding paved traffic route to indicate the location of for example lanes and edges of the road, preselection lanes, areas of no passing, pedestrian crossings and other similar parts of traffic routes, and to convey to road users information that increases the smooth flow and safety of traffic. In the present application, traffic routes will be hereinafter referred to as 'roads', which cover not only roads but also parking places, pedestrian and bicycle ways and other areas paved with asphalt, concrete or some other similar material.

Road markings must withstand strains caused by traffic in all seasons, and they must be clearly distinguishable from the rest of the road in daylight, in the dark as well as in wet weather. That is to say, the luminance and retroreflectivity of the road marking material must comply with officially set standards. The prior art teaches the use of different paints and mass-type marking materials for road marking. In the case of paints, the greatest layer thickness is typically 0.3 mm. Paints have previously been mostly solvent-based, but due to environmental hazards caused by the use of solvents water-based paints are used more and more often. The proportion of water-based paints of all road marking materials is presently about 95% and further increasing due to the strict environmental standards set for the materials. Water-based paints require a rather long drying time, wherefore fresh paint markings must be protected from traffic for example by means of plastic or foam cones or other similar warning devices placed on the road to caution and guide the traffic. Positioning and possible removal of such warning devices naturally creates employment, material and equipment costs and further disturbs normal traffic on the road. When markings are made, the weather should be dry for a rather long time since rain quickly dissolves any undried paint, making the markings unclear and therefore often requiring repainting. There is thus a rather limited number of moments that are suitable for painting road markings, wherefore markings may have to be made on several different occasions, which results in considerable load peaks and costs of the workers and equipment providing the markings. Paints used for road markings usually have low abrasion resistance especially in northern or other similar conditions where the temperature on the road surface falls below zero and the road is subjected to extreme mechanical stress caused for example by anti-skid studs of vehicles, ploughing of snow from the road and other similar strains. Furthermore, in order to provide retroreflectivity properties of paints fulfilling the required standard, glass beads are sprinkled on the surface of the wet paint, sticking to the paint when it dries. However, the glass beads gradually wear off the surface of the paint, whereupon the retroreflectivity of the road marking deteriorates substantially. Paints are therefore typically used on roads subjected to minimal stress. However, even on such roads the painting must be redone rather often, preferably once a year, to maintain a sufficient level of safety. Thus, despite the low cost per square meter of a painted road marking, the often repeated painting causes employment, equipment and material costs that considerably increase the total costs of painted road markings.

In addition to paints, road markings are made with materials known as road marking masses, such as spray masses that mainly comprise resins, elastomers, extenders and colourants. A typical layer thickness of a marking made with road marking masses varies from 1.5 to 3 mm, which means that such masses provide far thicker markings than paints. Road marking masses are heated on site into a hot mass that is spread either by spraying or casting over desired parts of the road surface. Glass beads are sprinkled on the mass surface similarly as in the case of paints. Furthermore, road marking masses usually comprise glass beads mixed within the mass, thus providing good retroreflectivity of the road marking during the entire life thereof, even though some of the material wears off the marking. Road marking masses have substantially higher abrasion resistance than paints and they are used to make markings on busy roads. A drawback of the masses is their hardness, especially in cold conditions, which makes the masses crack due to vibration and mechanical contacts caused by traffic. Mechanical contacts result particularly from the great thickness of the mass layer, which means that snow-ploughs and other similar machines tend to come into contact with and damage the marking material. In practice it is virtually impossible to form markings of less than 1.5 mm in thickness from the road marking masses, since the mass cannot be spread into a thinner layer. One reason for this is that a thinner layer of mass cools down too quickly and does not adhere to the road surface. Further, the prices per square meter of the road marking masses are very high and the masses are difficult to spread.

An object of the present invention is to provide a road marking material with improved properties.

The road marking material according to the invention is characterized in that the material comprises pentaerythritol ester, elastomer, paraffin- and/or naphthene-based oil, and an extender, the proportions of said components with respect to one another being: 100 parts of pentaerythritol ester, 22 to 61 parts of elastomer, 20 to 55 parts of paraffin- and/or naphthene-based oil, and 140 to 400 parts of an extender.According to a basic idea of the invention, the road marking material comprises pentaerythritol ester, elastomer, paraffin- and/or naphthene-based oil, and an extender, and the proportions of these components with respect to one another are as follows: 100 parts of pentaerythritol ester, 22 to 61 parts of elastomer, 20 to 55 parts of paraffin- and/or naphthene-based oil, and 140 to 400 parts of an extender. Furthermore, the road marking material can be used to form a road marking which is substantially at most 0.7 mm, preferably 0.3 to 0.6 mm in thickness. It should be mentioned that in the present application the proportions of the components are given in proportions by weight, unless otherwise mentioned. Further, the idea of a preferred embodiment of the invention is that the material also comprises at most 120 parts of aliphatic hydrocarbon resins, colourants, such as titanium dioxide, and light-reflecting particles, for example glass beads. According to another preferred embodiment, the elastomeric component comprises styrene butadiene rubber, ethyl vinyl acetate copolymer and butyl rubber in the following ratios: 10 to 40 parts of styrene butadiene rubber, 5 to 20 parts of ethyl vinyl acetate copolymer and 1 to 5 parts of butyl rubber.

An advantage of the invention is that the road marking material can be used to form a road marking layer which is at most 0.7 mm in thickness, i.e. substantially as thick as a paint marking, but which has substantially as high abrasion resistance as the prior art road marking masses. The road marking material according to the invention provides markings with approximately equal costs per square meter as markings made with paint, but the abrasion resistance is far higher than that of paint markings. Thus, when paint is replaced with the material according to the invention, the interval at which the markings must be redone can be doubled, tripled or lengthened even further. Also, the material according to the invention provides another advantage over the paints, i.e. the spreading is not equally dependent on Weather conditions since the material of the invention dries immediately and becomes rainproof. Furthermore, disturbance to traffic is minimal since the material is trafficable substantially immediately after its application. The material according to the invention has almost identical abrasion resistance properties compared with the prior art road marking masses, but its costs per square meter are considerably lower and markings can be made more easily, thus resulting in lower total costs. The specific weight of the material according to the invention varies between 1.45 and 1.55 g/cm³, and the material is needed for road markings typically in an amount of about 700 to 800 g/m², which is far less than the consumption of road marking masses that is about 6 kg/m². Markings can be provided rapidly and at low cost not only due to the lower material expenses but also since one full container of a spreading machine is sufficient to mark a considerably longer distance of road than in the case of conventional road marking masses. Since markings can be provided more rapidly, also the disturbance and dangerous situations caused by the application of markings to the other traffic decreases in proportion. Furthermore, the material according to the invention does not harden or crack at subzero temperatures as easily as the conventional road marking masses. A preferred embodiment of the invention comprises glass beads mixed with the material, which provides good reflection properties of a marking during the entire life thereof. Another advantage is that the layer thickness of a road marking according to the invention is so small that snow-ploughs and other similar machines do not come into contact with and damage the marking material, whereupon the marking is not subjected to such mechanical strains that tend to damage prior art road markings, thus shortening their life.

The invention will be described in greater detail in the accompanying drawing, which shows schematically an embodiment of the road marking material according to the invention.

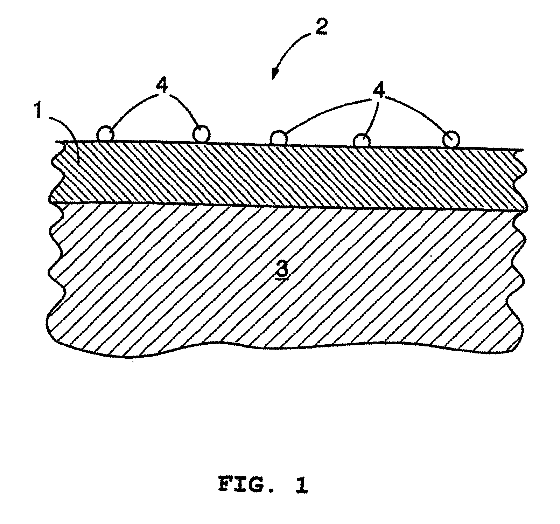

Figure 1 shows schematically an embodiment of a road marking material according to the invention. The road marking material 1 is used to form a road marking 2 on the surface of a paved, such as asphalted, road 3. The road marking 2 is preferably formed by bringing the material 1 to the place of application and heating it into a molten, fluid mass with a heater comprised by the road marking equipment, whereafter the molten material 1 is sprayed with nozzles to the road 3 surface to form from the material 1 a road marking 2 of a suitable thickness and shape on the road 3 surface. The thickness of the road marking 2 is at most 0.7 mm, preferably 0.3 to 0.6 mm, which means that the marking 2 is so thin that snow-ploughs, road graders and other similar machines used in road maintenance do not come into contact with and damage the marking 2, which is, however, sufficiently thick to withstand for several years the wearing caused by traffic. The heater mentioned above is usually an oil burner, but it can also be operated by means of gas or electricity. The melting of the material 1 and other methods and means related to forming a road marking are known per se to those skilled in the art, wherefore they will not be described in greater detail herein. When a marking 2 is formed, glass beads 4 are spread on the surface of the material 1 by a separate nozzle. The glass beads adhere to the material 1 that has not yet hardened and they improve the retroreflectivity of the road marking 2 and make the marking more visible especially in the dark and in wet conditions.

The road marking material 1 is formed as follows:

### Example 1:

100 parts of pentaerythritol ester (trade name Permalyn 6110), which corresponds to about 30% by weight of the entire amount of the material 1, were mixed with altogether 22 parts (about 7% by weight) of elastomer, i.e. 13 parts of styrene butadiene rubber (trade name Kraton D-1161 N), 7 parts of ethyl vinyl acetate copolymer (trade name Escorene UL 40028 CC), and 2 parts of butyl rubber (trade name BDO-25); and 18 parts (about 5% by weight) of titanium dioxide (trade name RR-2) used as a colourant, 20 parts (about 6% by weight) of solvent-refined paraffin- and naphthene-comprising oil, 140 parts (about 42% by weight) of limestone powder used as an extender, and 35 parts (about 10% by weight) of glass beads. The road marking material 1 was used to form a material layer, which was subjected to measurement of luminance by the RANK 8102 method to obtain a luminance value of 0.83, which fulfils the quality requirement 0.70 set for luminance. The Tröger abrasion value was measured by the TIE 442 method to obtain a value of 0.2 cm³, which fulfils the preset quality requirement of < 1.5 cm³. Adhesion was measured by the Swedish tensile test by the WMB 520:93 method at +20 EC to obtain a value 1.7 N/mm², which fulfils a preset quality requirement of 1.3 N/mm².

The road marking material 1 according to the invention fulfils the quality requirements set for luminance, abrasion resistance and adhesion of road marking materials. The material 1 can be mixed in conventional mixers known to those skilled in the art at a temperature of typically 90 to 230 EC. Thermoplastic elastomers increase the elasticity and adherence of a road marking 2 to the road 3 surface, thus improving the abrasion resistance of the road marking 2. Further, the thermoplastic elastomers improve the mixability of the material, thus enhancing the homogeneity of the material 1. Glass beads that are randomly mixed in the material 1 become visible as the road marking 2 wears off, and thus the retroreflectivity properties of the marking 2 do not substantially deteriorate as the marking 2 becomes thinner. The greatest diameter of the glass beads can be equal to at most the layer thickness of the road marking 2 to be applied, in order to provide a substantially even surface of the marking 2 made from the material 1. The glass beads in the material 1 can naturally be supplemented or replaced with other light-reflecting particles.

The proportion of the pentaerythritol ester contained in the road marking material 1 can be decreased by replacing some of it with a less expensive aliphatic hydrocarbon resin for example as follows:

### Example 2:

100 parts (about 11% by weight) of pentaerythritol ester were mixed with 120 parts (about 14% by weight) of aliphatic hydrocarbon resin (trade name Piccopale 100), 61 parts (about 7% by weight) of elastomer, consisting of 36 parts of styrene butadiene rubber, 20 parts of ethyl vinyl acetate copolymer and 5 parts of butyl rubber; and 55 parts (about 6% by weight) of paraffin- and naphthene-containing oil, 50 parts (about 6% by weight) of titanium dioxide as a colourant, 200 parts (about 23% by weight) of limestone powder as an extender, 200 parts (about 23% by weight) of quartz rock, and 85 parts (about 10% by weight) of glass beads.

Properties of a road marking 2 made from the material 1 prepared in Example 2 are substantially' similar to the properties of the material disclosed in Example 1. In accordance with the examples described above, the road marking material 1 can also be prepared such that the extender comprises only quartz rock in an amount of about 140 to 400 parts. Quartz rock is not only hard but also white, which makes a material 1 filled with quartz rock extremely suitable for application in connection with white road markings 2. The extender can naturally consist either entirely or partly of some other material than limestone or quartz rock. The particle size of the extender is preferably at most 0.25 mm, so that, on the one hand, the material 1 can be easily formed into a road marking 2 of a thickness of 0.3 to 0.6 mm, and, on the other hand, the viscosity range of the material 1 is suitable for processing the material 1 with conventional mixing and spreading means.

The road marking material 1 can also be prepared as follows:

### Example 3:

100 parts (about 18% by weight) of pentaerythritol ester were mixed with 50 parts (about 9% by weight) of aliphatic hydrocarbon resin, 40 parts (about 7% by weight) of elastomer, consisting of 25 parts of styrene butadiene rubber, 12 parts of ethyl vinyl acetate copolymer and 3 parts of butyl rubber; and 35 parts (about 6% by weight) of paraffin-based oil, 30 parts (about 5% by weight) of titanium dioxide as a colourant, 250 parts (about 44% by weight) of limestone powder as an extender, and 60 parts (about 11% by weight) of glass beads.

The titanium dioxide used as a colourant makes the road marking material 1 white, which is the most typically used colour of road markings. The material 1 can also be provided with some other colour than white by mixing therein another corresponding suitable colourant.

The road marking material 1 can further be prepared as follows:

### Example 4:

100 parts (about 22% by weight) of pentaerythritol ester were mixed with 20 parts (about 4% by weight) of aliphatic hydrocarbon resin, 32.5 parts (about 7% by weight) of elastomer, consisting of 20 parts of styrene butadiene rubber, 10 parts of ethyl vinyl acetate copolymer and 2.5 parts of butyl rubber; and 28 parts (about 6% by weight) of paraffin- and naphthene-containing oil, 25 parts (about 6% by weight) of titanium dioxide as a colourant, 200 parts (about 44% by weight) of limestone powder as an extender, and 50 parts (about 11 % by weight) of glass beads.

Pentaerythritol ester makes the material 1 adhere more firmly to the road 3. When the proportion of the aliphatic hydrocarbon resin contained in the road marking material 1 is varied within a range of 0 to 120 parts of resin per 100 parts of pentaerythritol, the properties of the material 1 can be modified according to the specific requirements of the road 3. For example, roads that are subjected to a great deal of traffic are marked with a material 1 that only comprises pentaerythritol ester, whereas roads with less traffic are marked with a material 1 where some of the pentaerythritol ester is replaced with aliphatic hydrocarbon resin, which decreases the costs of raw material.

The drawing and the related description are only intended to illustrate the inventive idea. The details of the invention can vary within the scope of the claims.

## Claims

1. A road marking material (1) suitable for forming a road marking having a layer thickness of at most 0.7 mm, the material comprising resin, elastomer and an extender, **characterized in that** the material (1) comprises pentaerythritol ester, elastomer, paraffin- and/or naphthene-based oil, and an extender, the proportions of said components with respect to one another being: 100 parts of pentaerythritol ester, 22 to 61 parts of elastomer, 20 to 55 parts of paraffin- and/or naphthene-based oil, and 140 to 400 parts of an extender.

2. A road marking material according to claim 1, **characterized in that** the layer thickness of the road marking (2) to be applied is substantially between 0.3 and 0.6 mm.

3. A road marking material according to claim 1 or 2, **characterized in that** the elastomer comprises styrene butadiene rubber, ethyl vinyl acetate copolymer and butyl rubber.

4. A road marking material according to claim 3, **characterized in that** the proportions of the components are: 10 to 40 parts of styrene butadiene rubber, 5 to 20 parts of ethyl vinyl acetate copolymer, and 1 to 5 parts of butyl rubber.

5. A road marking material according to any one of the preceding claims, **characterized in that** the material (1) further comprises at most 120 parts of aliphatic hydrocarbon resin.

6. A road marking material according to any one of the preceding claims, **characterized in that** the extender is a stone powder with a particle size of less than 0.25 mm.

7. A road marking material according to any one of the preceding claims, **characterized in that** the material (1) further comprises 35 to 85 parts of light-reflecting particles whose particle size is at most 0.7 mm.

8. A road marking material according to claim 7, **characterized in that** the light-reflecting particles comprise glass beads.

9. A road marking material according to any one of the preceding claims, **characterized in that** the material (1) further comprises a colourant.

10. A road marking material according to claim 9, **characterized in that** the colourant consists substantially of titanium dioxide.

11. A road marking material according to any one of the preceding claims, **characterized in that** the extender comprises limestone.

12. A road marking material according to any one of the preceding claims, **characterized in that** the extender comprises quartz rock.

13. A road marking formed from the material according to any one of the preceding claims, **characterized in that** the surface of the marking is provided with glass beads (4).

## Patentansprüche

1. Straßenmarkierungsmaterial (1), geeignet zur Bildung einer Straßenmarkierung mit einer Schichtdicke von höchstens 0,7 mm, wobei das Material Harz, Elastomer und ein Streckmittel umfasst, **dadurch gekennzeichnet, dass** das Material (1) Pentaerythritester, Elastomer und Öl auf Parafinund/oder Naphthenbasis und ein Streckmittel umfasst, wobei die Anteile dieser Komponenten aufeinander bezogen wie folgt sind: 100 Teile Pentaerythritester, 22 bis 61 Teile Elastomer, 20 bis 55 Teile Öl auf Parafin- und/oder Naphthenbasis sowie 140 bis 400 Teile eines Streckmittels.

2. Straßenmarkierungsmaterial nach Anspruch 1, **dadurch gekennzeichnet, dass** die Schichtdicke der aufzutragenden Straßenmarkierung (2) im Wesentlichen zwischen 0,3 und 0,6 mm liegt.

3. Straßenmarkierungsmaterial nach Anspruch 1 oder 2, **dadurch gekennzeichnet, dass** das Elastomer Styrol-Butadien-Kautschuk, Ethylvinylacetatcopolymer und Butylkautschuk umfasst.

4. Straßenmarkierungsmaterial nach Anspruch 3, **dadurch gekennzeichnet, dass** die Anteile der Komponenten die Folgenden sind: 10 bis 40 Teile Styrol-Butadien-Kautschuk, 5 bis 20 Teile Ethylvinylacetatcopolymer und 1 bis 5 Teile Butylkautschuk.

5. Straßenmarkierungsmaterial nach einem der voranstehenden Ansprüche, **dadurch gekennzeichnet, dass** das Material (1) des Weiteren höchstens 120 Teile aliphatisches Kohlenwasserstoffharz umfasst.

6. Straßenmarkierungsmaterial nach einem der voranstehenden Ansprüche, **dadurch gekennzeichnet, dass** das Streckmittel ein Steinpulver mit einer Partikelgröße von weniger als 0,25 mm ist.

7. Straßenmarkierungsmaterial nach einem der voranstehenden Ansprüche, **dadurch gekennzeichnet, dass** das Material (1) des Weiteren 35 bis 85 Teile lichtreflektierende Partikel umfasst, deren Partikelgröße höchstens 0,7 mm beträgt.

8. Straßenmarkierungsmaterial nach Anspruch 7, **dadurch gekennzeichnet, dass** die lichtreflektierenden Partikel Glasperlen umfassen.

9. Straßenmarkierungsmaterial nach einem der voranstehenden Ansprüche, **dadurch gekennzeichnet, dass** das Material (1) des Weiteren ein Farbmittel umfasst.

10. Straßenmarkierungsmaterial nach Anspruch 9, **dadurch gekennzeichnet, dass** das Farbmittel im Wesentlichen aus Titandioxid besteht.

11. Straßenmarkierungsmaterial nach einem der voranstehenden Ansprüche, **dadurch gekennzeichnet, dass** das Streckmittel Kalkstein umfasst.

12. Straßenmarkierungsmaterial nach einem der voranstehenden Ansprüche, **dadurch gekennzeichnet, dass** das Streckmittel Quarzgestein umfasst.

13. Straßenmarkierung, gebildet aus dem Material nach einem der voranstehenden Ansprüche, **dadurch gekennzeichnet, dass** die Oberfläche der Markierung mit Glasperlen (4) versehen ist.

## Revendications

1. Matériau de marquage de route (1) apte à former un marquage de route présentant une épaisseur de couche de 0,7 mm au plus, le matériau comprenant une résine, un élastomère et une matière de charge, **caractérisé en ce que** le matériau (1) comprend un ester de pentaérythritol, un élastomère, une huile à base de paraffine et/ou de naphtène et une matière de charge, les proportions desdits composants les uns par rapport aux autres étant : 100 parties d'ester de pentaérythritol, 22 à 61 parties d'élastomère, 20 à 55 parties d'une huile à base de paraffine et/ou de naphtène, et 140 à 400 parties d'une matière de charge.

2. Matériau de marquage de route selon la revendication 1, **caractérisé en ce que** l'épaisseur de couche du marquage de route (2) à appliquer est sensiblement entre 0,3 et 0,6 mm.

3. Matériau de marquage de route selon la revendication 1 ou 2, **caractérisé en ce que** l'élastomère comprend un caoutchouc styrène butadiène, un copolymère éthylène acétate de vinyle et un caoutchouc butyle.

4. Matériau de marquage de route selon la revendication 3, **caractérisé en ce que** les proportions des composants sont : 10 à 40 parties de caoutchouc styrène butadiène, 5 à 20 parties d'un copolymère éthylène acétate de vinyle et 1 à 5 parties de caoutchouc butyle.

5. Matériau de marquage de route selon l'une quelconque des revendications précédentes, **caractérisé en ce que** le matériau (1) comprend en outre au moins 120 parties d'une résine hydrocarbonée aliphatique.

6. Matériau de marquage de route selon l'une quelconque des revendications précédentes, **caractérisé en ce que** la matière de charge est une poudre de pierre ayant une taille de particules inférieure à 0,25 mm.

7. Matériau de marquage de route selon l'une quelconque des revendications précédentes, **caractérisé en ce que** le matériau (1) comprend en outre 35 à 85 parties de particules réfléchissant la lumière dont la taille de particules est de 0,7 mm au plus.

8. Matériau de marquage de route selon la revendication 7, **caractérisé en ce que** les particules réfléchissant la lumière comprennent des billes de verre.

9. Matériau de marquage de route selon l'une quelconque des revendications précédentes, **caractérisé en ce que** le matériau (1) comprend en outre un colorant.

10. Matériau de marquage de route selon la revendication 9, **caractérisé en ce que** le colorant est constitué sensiblement de dioxyde de titane.

11. Matériau de marquage de route selon l'une quelconque des revendications précédentes, **caractérisé en ce que** la matière de charge comprend du calcaire.

12. Matériau de marquage de route selon l'une quelconque des revendications précédentes, **caractérisé en ce que** la matière de charge comprend du cristal de roche.

13. Matériau de marquage de route selon l'une quelconque des revendications précédentes, **caractérisé en ce que** la surface du marquage est pourvue de billes de verre (4).
